# EUROPÄISCHE PATENTSCHRIFT

(11) **EP 2 894 413 B1**
(45) Veröffentlichungstag und Bekanntmachung des Hinweises auf die Patenterteilung: **17.04.2019**
(21) Anmeldenummer: 14002679.0
(22) Anmeldetag: 31.07.2014
(51) Int. Cl.: F24F 11/00, F24F 13/14, A01K 1/00, F24F 11/89

(54) **Belüftungsanlage für Ställe**
Ventilation system for stables
Installation d'aération pour étables

(30) Priorität: 09.01.2014 DE 202014000046 U
(43) Veröffentlichungstag der Anmeldung: 15.07.2015
(73) Patentinhaber: Hölscher & Leuschner GmbH & Co., 48488 Emsbüren (DE)
(72) Erfinder: Hölscher, Richard, Dr., 48488 Emsbüren (DE); Hoffrogge, Michael, 48480 Spelle (DE)
(74) Vertreter: Wischmeyer, André

(56) Entgegenhaltungen:
- DE-A1- 1 927 998
- DE-A1- 2 036 716
- DE-A1- 3 008 995
- DE-T2- 69 413 666
- DE-U1- 20 009 253
- US-A- 4 832 260
- US-A1- 2007 099 555

## Beschreibung

Die vorliegende Erfindung betrifft eine Belüftungsanlage für Ställe, insbesondere eine Schweine-, Federvieh-, o.dgl. Nutztierstallbelüftungsanlage, umfassend wenigstens ein Betätigungsmittel für zwischen einer Geschlossen- und zumindest einer Offenstellung bewegbare Belüftungselemente, insbesondere Fenster und/oder Lüftungsklappen, wie sie auch als Abluftklappen bezeichnet in Abluftschächten verwendet werden, mit einem Antrieb für das Betätigungsmittel und einem Druckluftspeicher, der im Notfall Energie zur Verfügung stellen kann, mit einem Leitungssystem, über dass der Antrieb im Notfall mit Energie beaufschlagt werden kann, und mit wenigstens einem Stellglied, welches im Notfall zur Herstellung einer Verbindung zwischen Druckluftspeicher und Antrieb schaltet.

Aus dem Stand der Technik ist es bekannt, dass für den Fall eines Temperaturanstiegs in den Stallanlagen mit elektrischer Energie betriebene Ventilatoren, die thermostatisch gesteuert werden, eingeschaltet werden und somit die verbrauchte Luft ab- sowie frische Luft zugeführt werden kann. Für einen Stromausfall sind diese Anlagen jedoch nicht ausreichend abgesichert. Bei Ausbleiben einer Lüftung müssen in einem solchen Notfall die Lüftungselemente von Hand geöffnet werden. Es existieren allerdings nur sehr kleine Zeitfenster, innerhalb derer die Luftzufuhr erfolgen muss. Verspätungen von beispielsweise einer halben Stunde können für größere Anlagen z.B. bei Ställen für Federvieh, bereits zu hohen Sterberaten führen. Auch bei Schweineställen ist das zur Verfügung stehende Fenster von wenigen Stunden sehr klein.

Es ist daher vorgeschlagen worden, mit autarken Energiespeichern versorgte Notfallsysteme vorzuhalten, die im Notfall die Versorgung der elektrischen Stellmittel übernehmen. Allerdings hat sich in der Praxis gezeigt, dass eine Vielzahl der Landwirte nicht die notwendigen Wartungsintervalle für die Batterien oder Akkumulatoren einhalten. Diese Energiespeicher sind daher oftmals ungewartet defekt, was wiederum zu großen Verlusten an Nutztieren führen kann.

Ebenfalls im Stand der Technik ist vorgeschlagen worden (DE 1927998 A1), einen Druckluftspeicher zur Verfügung zu stellen, der im Notfall Energie zur Verfügung stellen kann. Auch hier gibt es allerdings das vorbeschriebene Wartungsproblem, da es sich um eine separate Einheit handelt, die nur im Notfall benötigt wird. Im Zweifel kann der Druckluftspeicher eine für die Betätigung des Betätigungsmittels benötigte Energie nicht zur Verfügung stellen.

In der DE 20 36 716 ist vorgeschlagen worden, eine Druckgaspatrone als Speicher zu verwenden. Darüber hinaus ist die Kolbenstange des vom Andruckmedium beaufschlagbaren Kolbens auf beiden Seiten des Kolbens mit einer Einrastnut ausgestattet ist, in die Arretierungseinrichtungen eingreifen können, um die Kolbenstange in einer offenen bzw. geschlossenen Position festlegen zu können.

In der DE 200 09 253 U1 ist eine gattungsgemäße elektropneumatisch gesteuerte Rauchabzugs- und/oder Entlüftungsanlage beschrieben, die im Normalbetrieb bei einem reduzierten Druck arbeitet und Klappen bzw. Fenster dem Lüftungsbedarf entsprechend öffnet oder schließt. In einem Notfall kann die Druckreduzierung für den Normalbetrieb durch ein elektromagnetisch zu betätigendes Ventil überbrückt werden, um besondere, erst bei hohem Druck pneumatisch gesteuerte Ventile umzuschalten und den hohen Druck die pneumatischen Betätigungselemente der Klappen bzw. Fenster zu deren Öffnung auszufahren. Die speziell für den Notfall bereitgehaltenen Teile der Anlage können - im Normalbetrieb unbemerkt - ausfallen, wenn sie nicht regelmäßig überprüft werden. Die DE 200 09 253 U1 offenbart dabei eine Belüftungsanlage für Tierställe gemäß dem Oberbegriff von Anspruch 1.

Es ist daher Aufgabe der vorliegenden Erfindung, einen Gegenstand nach dem Oberbegriff des Anspruchs 1 hinsichtlich seiner Ausfallsicherheit zu verbessern. Die Aufgabe wird gelöst durch einen Gegenstand gemäß Anspruch 1. Vorteilhafte Ausgestaltungen der Erfindung finden sich in den hierauf rückbezogenen Unteransprüchen sowie der Beschreibung.

Erfindungsgemäß ist vorgesehen, dass das Stellglied und der Druckluftspeicher ebenfalls für den Normalbetrieb vorgesehen sind. Durch die ständige und notwendige Verfügbarkeit für den Normalbetrieb ist es nicht mehr notwendig, dass das Notfallsystem in größeren Abständen überprüft wird. Die Überprüfung findet in der täglichen Handhabung statt. Ein Ausfall des Systems, sei es auf Seiten des Betätigungsmittels, des Antriebs oder des Druckluftspeichers oder des Stellgliedes, wird während des täglichen Umgangs bemerkt.

Die Integration des Notfallsystems in das Normalsystem mit den Komponenten Druckluftspeicher, Stellglieder, Betätigungsmittel, Lüftungselement und Leitungssystem ist insbesondere dann gegeben, wenn ein den Druckluftspeicher versorgender Kompressor und das mit Feder- oder pneumatischer Rückstellung versehene Stellglied über dieselbe Stromquelle mit elektrischer Energie versorgt werden. Probleme entweder auf Seiten des Druckluftspeichers und dessen Versorgung mittels des Kompressors oder auf Seiten des Stellgliedes, würden in demselben für die tägliche Praxis benötigten System zu Problemen führen, die entsprechend schnell bemerkt und behoben werden können.

Vorzugsweise ist der Antrieb auf eine Druckkraft sowie eine Zugkraft zwischen 0,5 und 4 kN ausgelegt.

Das Betätigungsmittel zur pneumatischen Betätigung ist insbesondere als doppelt wirkender Pneumatikzylinder ausgebildet, wobei die Belüftungsanlage eine auf das Betätigungsmittel wirkende Bremseinheit aufweist, die im Normalbetrieb über ein weiteres Stellglied zwecks Einnahme einer Geschlossenstellung oder einer anderen Verriegelungsstellung mit z.B. leicht geöffneten Lüftungselementen betätigbar und hierfür insbesondere mit Druckluft beaufschlagbar ist.

Statt eines doppelt wirkenden Zylinders kann der Aufbau auch mit einem einen einfach wirkenden Zylinder versehenen Antrieb ausgestattet sein, der gegen feder- und/oder gewichtskraftbelastete Lüftungselemente arbeitet. Im Notfall wird dieser Zylinder drucklos gestellt und die Lüftungselemente gehen auf.

Die Bremseinheit bewirkt einerseits eine Festlegung des Betätigungsmittels im Normalbetrieb. Insbesondere werden auf diese Weise im System beispielsweise aufgrund von Windlasten auf Lüftungselemente eingetragene Schwingungen wirkungsvoll blockiert.

Andererseits ist bei einem vorteilhaften Ausführungsbeispiel, bei dem die Länge einer zur Bremseinheit führenden Leitung vom Druckluftspeicher geringer ist als die Länge der vom Druckluftspeicher zum Antrieb führenden Leitung, gewährleistet, dass ein bestimmter Verstellweg oder ein Öffnungswinkel des Fensters exakt eingestellt werden kann. Die Bremseinheit kann aufgrund der kurzen Versorgungswege schneller angesteuert werden als die zum Betätigungsmittel führenden Leitungen, die in der Regel über eine erhöhte Anzahl an Ventilen zur Steuerung des Betätigungsmittels verfügen. Die Bremseinheit kann somit schneller bremsen als der Antrieb reagieren kann.

Bei dem oder den Stellgliedern handelt es sich um Magnetventile mit Federkraft- oder pneumatischer Rückstellung. Im Falle eines Stromausfalls wird das Ventil stromlos und der Magnet gibt das Stellmittel des Ventils frei, so dass dieses sich in seine durch die Feder oder den Druck eines insbesondere internen Druckspeichers vorgegebene Position bewegen kann.

Erfindungsgemäß weist die Bremseinheit eine Bremse auf, die über einen federkraftbeaufschlagten, einfach wirkenden Zylinder auf das Betätigungsmittel wirken kann. Im Normalbetrieb kann die Bremseinheit und somit der Zylinder mit Druck beaufschlagt werden und in seine gegen die Federkraft einzunehmende Bremsstellung überführt werden.

Vorteilhafterweise ist der einen Pneumatikzylinder aufweisende Antrieb auf den beiden Seiten des Kolbens des Zylinders mit unterschiedlichen Drücken beaufschlagbar, wobei diese Drücke zumindest ein, vorzugsweise über jeweils ein Druckbegrenzungsventil, welches über ein Rückschlagventil mit einer zur Bremseinheit führenden Leitung verbunden ist, vorgebbar sind. Alternativ können die unterschiedlichen Drücke auch vorgegeben sein. Auch kann bei Verwendung von lediglich einem Druckbegrenzungsventil eine Seite mit dem Arbeitsdruck und die andere Seite mit reduziertem Druck beaufschlagt werden.

Im Normalbetrieb führt die Druckbeaufschlagung der Bremse beispielsweise mit 7 bar zu einem Festhalten des Betätigungsmittels. Gleichzeitig führt die Beaufschlagung der beiden Seiten eines doppeltwirkenden Zylinders über die Druckbegrenzungsventile zu einem langsamen und präzisen Anfahren des Antriebs. Die sonst bei pneumatisch betriebenen Betätigungsmitteln vorhandenen Probleme hinsichtlich der Einstellgenauigkeit können so wirkungsvoll vermieden werden. Das System kann sanft anfahren.

Zwecks eines verbesserten Festhaltens des Betätigungsmittels kann dieses im Bereich der Bremse eine Profilierung, Gummierung oder dergleichen reibungserhöhende Mittel aufweisen. Auch kann die Bremse entsprechend angespannt sein und reibungserhöhende, insbesondere komplementär ausgebildete Oberflächen aufweisen. Vorzugsweise ist das Betätigungsmittel zur gleichzeitigen Verstellung mehrerer Lüftungselemente ausgebildet, was die Gestehungskosten und die Komplexität sowie die Fehleranfälligkeit der Anlage verringert. Gleichzeitig fällt ein Fehler im System, der dann das gesamte System und dessen Funktionsfähigkeit beeinträchtigt, schneller auf.

Insbesondere handelt es sich bei dem Betätigungsmittel um eine entlang der Lüftungselemente zu lagernde Stange, von der über Verbindungsmittel auf die Lüftungselemente eingewirkt werden kann. Alternativ kann es sich auch um ein seilartiges Betätigungselement handeln.

Eine als Zug-/Druckstange, beispielsweise auch als Zahnstange, ausgebildete Stange ist wartungsfrei und ohne weiteres endseitig über einen doppeltwirkenden Zylinder antreibbar. Der als Antrieb verwendete Zylinder wirkt vorzugsweise direkt auf die Stange ein, ist also endseitig derselben angeordnet. Er kann auch über Umlenkhebel zwecks Übersetzung der ausgeübten Kräfte auf die Stange einwirken. Insbesondere bei Verwendung einer Zahnstange kann es vorteilhaft, statt eines doppeltwirkenden Zylinders einen Pneumatikmotor zu verwenden.

Bei einer weiteren vorteilhaften Ausgestaltung der Belüftungsanlage sind Umlenkeinheiten der Stange vorhanden, die jeweils gleichzeitig eine Umlenkung für das jeweils einenends an dem Betätigungsmittel und anderends an einem der Lüftungselemente zu befestigende, Zug- und/oder Druckkräfte übertragende Verbindungselement aufweisen. Während einerseits die Montage des Systems vereinfacht durchführbar ist, können beispielsweise Probleme in Umlenkrollen eines als Verbindungsseils ausgebildeten Verbindungselements zu einem Fenster, auch zu Problemen in der Führung der Stange führen, beispielsweise durch unbeabsichtigtes Aufwickeln des Seils um die Umlenkung. Dies kann zu einer Blockade der Bewegung der Stange führen. Ein solcher Fehlerfall wiederum ist schnell erkennbar.

Vorzugsweise weist das System zumindest einen, insbesondere jedoch eine Mehrzahl von Stellgliedern auf, wobei die Stellglieder als Magnetventile mit Federkraft oder pneumatischer Rückstellung ausgebildet sind und zur Verstellung des Betätigungsmittels und der Bremseinheit, insbesondere im Normalbetrieb, über eine Schalteinheit steuerbar sind. Das System ist hierbei für einen Notfall dergestalt ausgelegt, dass die Ventile durch die Feder in ihre Grundstellung überführt werden. Ausgehend von dieser Grundstellung sind dann die Ansteuerung der Bremsen und des Antriebs auszulegen, was betriebssicher durchführbar ist. So kann durch das Öffnen des in einer Leitung des Leitungssystems zur Bremseinheit angeordneten Ventils die Bremseinheit drucklos gestellt und/oder auf einer Seite entlüftet werden, was wie vorbeschrieben zu einem Öffnen der Bremse führt. Gleichzeitig kann durch das Öffnen eines unter Druck stehenden Leitungsbereiches Druckluft vom Druckluftspeicher zum Antrieb geleitet werden, so dass dieser, vorzugsweise als Zylinder ausgebildete Antrieb, "aufmacht" und die Lüftungselemente in eine Offenposition überführt bzw. eine offene Position nicht mehr behindert.

Bei einem weiteren Ausführungsbeispiel weist der Antrieb mehrere doppelt wirkende Zylinder insbesondere unterschiedlichen Hubs auf, welche mechanisch vorzugsweise unmittelbar hintereinander in Reihe angeordnet beziehungsweise geschaltet sind. Vorzugsweise können die Zylinder pneumatisch separat betätigt werden. Die Summe der Hübe aller Zylinder definiert den Gesamthub, die Aufteilung des Gesamthubs ist durch den Hub des kleinsten Zylinders gegeben.

Eine Verstellung des Betätigungsmittels wird dadurch realisiert, dass Zylinder in einer bestimmten Kombination voll aus- oder eingefahren werden. Im Ruhezustand während des Betriebes befinden sich hierdurch alle Zylinder in einem der beiden jeweiligen mechanischen Endpunkte, so dass durch die separate Betätigung einzelner oder die kombinierte Betätigung mehrerer Zylinder eine vorzugsweise gleichmäßige Rasterung der Verstellung des Lüftungselements gegeben ist.

Eine Ausbildung mit mehreren, doppelt wirkenden Zylindern hat den Vorteil, dass für Hydraulikkomponenten schädliche, insbesondere dynamische Lastaufnahmen, zum Beispiel durch Windeinflüsse, nur in den pneumatischen Komponenten jener Zylinder zu Druckspitzen führen, welche sich nicht einer in der Richtung der Krafteinwirkung ausgefahrenen Endstellung befinden. Ein Bremssystem kann optional entfallen.

Vorzugsweise werden die Zylinder in Ihrer Funktionsrichtung durch ein ein- oder mehrteiliges Führungselement geführt. Dieses Führungselement erhöht die Gesamtstabilität des Antriebs insbesondere im Betriebszustand und dient dem Ausgleich kleinerer Toleranzfehler des Antriebs, welche beispielsweise beim wartungsgemäßen Austausch von Zylindern hinsichtlich einer linearen Führung der Zylinder auftreten können. Des Weiteren wirkt das Führungselement einer potentiellen, schwerkraftbedingten Durchbiegung der linearen Zylinderanordnung entgegen. Das Führungselement weist vorzugsweise eine oder mehrere Führungsstangen auf, welche durch Bleche endseitig gehalten werden.

Insbesondere ist die erfindungsgemäße Belüftungsanlage mit einem Drucksensor versehen, der sowohl im Normal- wie auch im Fehlerfall den Druck im Druckluftspeicher und/oder in einer von dem Druckluftspeicher stammenden Druckleitung aufnimmt bzw. überwacht, wobei die Schalteinheit zur Ausgabe eines Alarmsignals bei Erreichen eines vorgebbaren oder vorgegebenen Minimaldrucks ausgebildet ist und im Alarmfall ein Auffahren der Lüftungselemente durch die Stromlosposition der Stellelemente bewirkt wird. Somit werden bereits im Normalbetrieb das Funktionieren und die Wartung des Druckluftspeichers überwacht. Die Schalteinheit umfasst zumindest neben Anzeigemitteln Mittel zur Ansteuerung der Stellglieder.

In einer weiteren vorteilhaften Ausbildung der Erfindung zeichnet sich eine Belüftungsanlage dadurch aus, dass das vorzugsweise als Lüftungsklappe ausgebildete Lüftungselement, welches jedoch auch als Fenster ausgebildet sein kann, im Normalbetrieb durch einen gegen die Gewichtskraft des Lüftungselements arbeitenden und einen Zylinder aufweisenden Antrieb in eine Geschlossenposition überführbar ist. Dies führt im Notfall zu einer zumindest u.a. gewichtskraftbasierten Öffnung der Lüftungselemente das Auffahren des Zylinders erfolgt wie vorbeschrieben dann zur Unterstützung des gewichtskraftbedingten Öffnens des Lüftungselements.

Beispielsweise können auch als Lüftungsklappen ausgebildete Lüftungselemente, die einen Abluftkanal verschließen können, im Notfall einfach auffallen. Alternativ können etwaige Lüftungsklappen im Notfall über dann wirksam werdende Kraftspeicherelemente, vorzugsweise Federn, gegen Ihre Gewichtskraft aufgezogen werden. Das hat den Vorteil, dass die Klappen durch etwaigen Zug nicht zuklappen können. Ein entsprechender Zylinder, der die Lüftungsklappen in Abluftrohren aufdrückt, kann hierfür über das im Notfall öffnende Magnetventil entlüftet werden.

Die Betriebssicherheit eines vorzugsweise auch als Schweinestall ausgebildeten Stalls ist dann erhöht, wenn eine Belüftungsanlage weiterhin mit einer Mehrzahl von als Fenstern ausgebildeten Lüftungselementen versehen ist, wobei die Fenster an ihrem unteren Ende gelagert sind und in ihrer Geschlossenstellung dergestalt ein bezüglich einer Lotrechten zum Lager versetztes oberes Ende aufweisen, dass sie im Notfall und insbesondere bei einem Nachgeben des Verbindungselements schwerkraftunterstützt öffnen. Die in einem solchen System wie auch in den weiteren beschriebenen Systemen eingesetzten Stellglieder sind insbesondere als 5/2 oder auch 3/2-Wege-Ventile ausgebildet, wobei sich durch die zumindest teilweise identische Ausbildung der Stellglieder Synergieeffekte bei Anschaffung und Wartung ergeben.

Vorzugsweise weist eine erfindungsgemäße Belüftungsanlage weiterhin einen Neigungssensor oder einen insbesondere an dem Antrieb oder dem Betätigungselement angeordneten Wegmesser auf, über den die Öffnungsstellung des Lüftungselements detektiert und insbesondere in einer Schalteinheit ausgegeben werden kann. Das entsprechende System ist somit insgesamt einfach und ausfallsicher aufgebaut, gleichzeitig in der täglichen Praxis ohne Weiteres verwendbar.

Weitere Vorteile und Einzelheiten der Erfindung sind in der nachfolgenden Figurenbeschreibung mit einer beispielhaften erfindungsgemäßen Ausbildung zu entnehmen.

In den Figuren zeigt auf schematische Weise:
- Fig. 1: eine Ansicht eines erfindungsgemäßen Gegenstands,
- Fig. 2: den Gegenstand nach Fig. 1 in einer Teilansicht,
- Fig. 3: eine aufgebrochene Ansicht eines Teils eines erfindungsgemäßen Gegenstands,

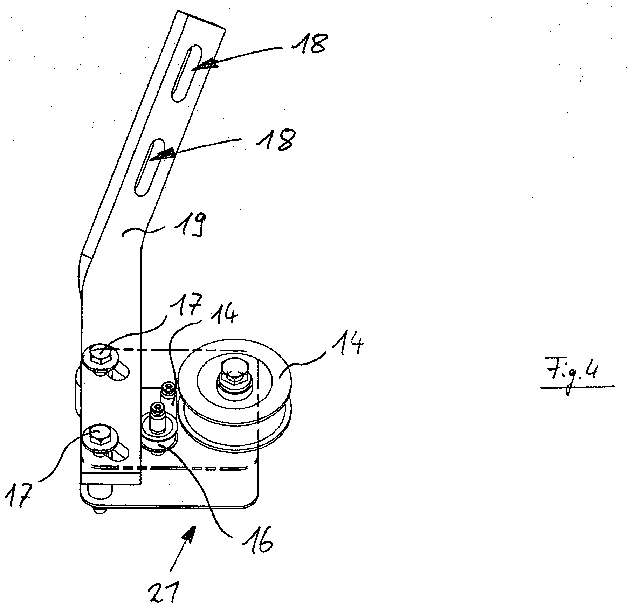

- Fig. 4: eine Ansicht eines weiteren Teils eines erfindungsgemäßen Gegenstands,
- Fig. 5: einen Schaltplan für Komponenten eines erfindungsgemäßen Gegenstands,
- Fig. 6: eine teilweise Ansicht eines weiteren erfindungsgemäßen Gegenstands.
- Fig. 7: eine Ansicht eines weiteren, erfindungsgemäßen Gegenstandes
- Fig. 8: einen Schaltplan für Komponenten eines wie in Figur 7 dargestellten, erfindungsgemäßen Gegenstands.

Gleich oder ähnlich wirkende Teile sind - sofern dienlich - mit identischen Bezugsziffern versehen. Einzelne technische Merkmale der nachfolgend beschriebenen Ausführungsbeispiele können mit den Merkmalen des Anspruchs 1 sowie mit den Merkmalen einzelner vorbeschriebenen Ausführungsbeispiele zu erfindungsgemäßen Weiterbildungen führen.

Eine erfindungsgemäße Belüftungsanlage ist mit einem Teil ihrer Komponenten auf einfache Weise an einer Traufe 1 eines nicht näher beschriebenen Schweinestalls angeordnet. Die erfindungsgemäße Belüftungsanlage weist ein als Stange ausgebildetes Betätigungsmittel 2 auf, welches in Richtung F hin- und herbewegbar ist, um eine Geschlossen- oder Offenstellung von über Verbindungselementen 10 angebundenen Lüftungselementen 5 herbeizuführen. Das Verbindungselement 10 ist auf Seiten bezogen auf die Umlenkeinheit 7 auf Seiten des Antriebs 3 an dem Betätigungselement angeordnet, so dass ein Ausfahren des Antriebs zu einem Nachgeben des Verbindungselements am als Fenster ausgebildeten Lüftungselement 5 führt. Dieses wird schwerkraftunterstützt in eine Offenstellung überführt.

Ein Antrieb 3 des Betätigungsmittels 2 ist als doppelt wirkender Pneumatikzylinder ausgebildet.

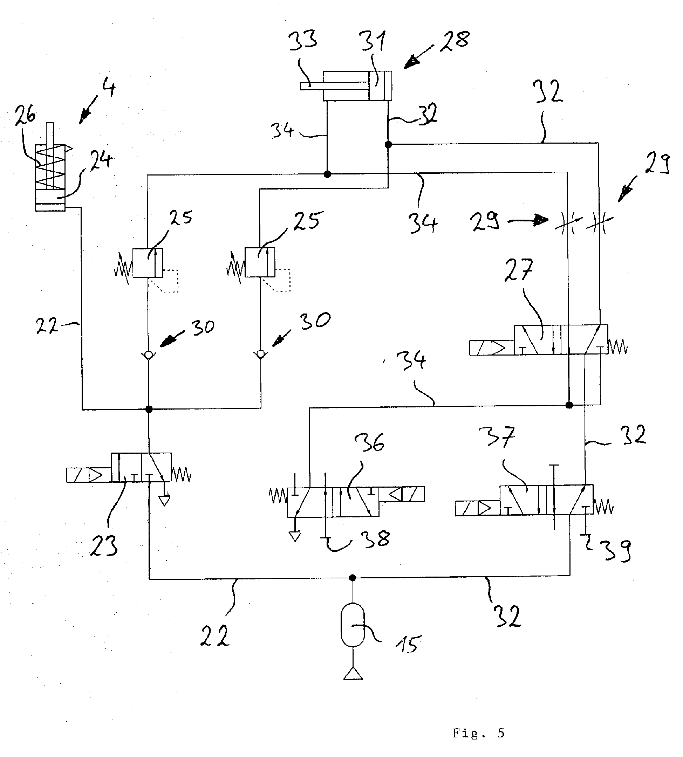

Ein Druckluftspeicher 15 ist in Fig. 5 gezeigt. Durch die Verwendung des Druckluftspeichers 15 auch im Normalbetrieb ist die Belüftungsanlage ausfallsicher ausgebildet.

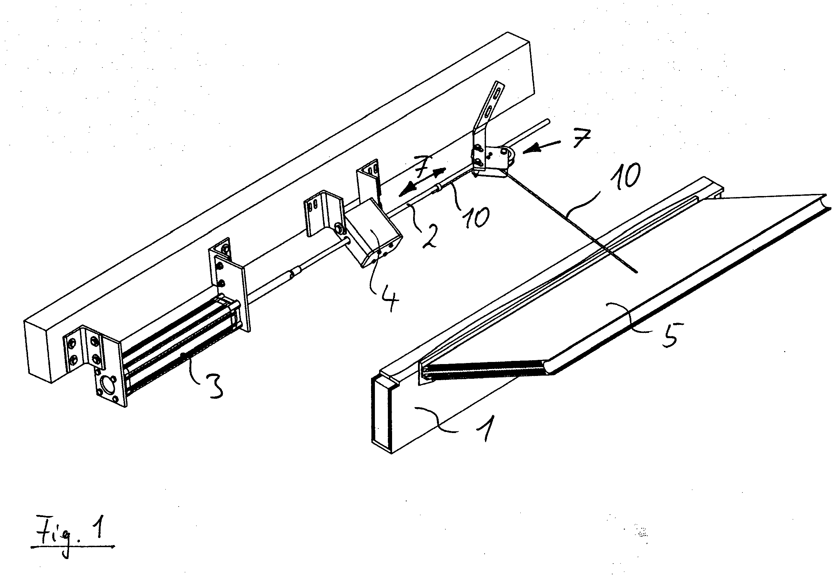

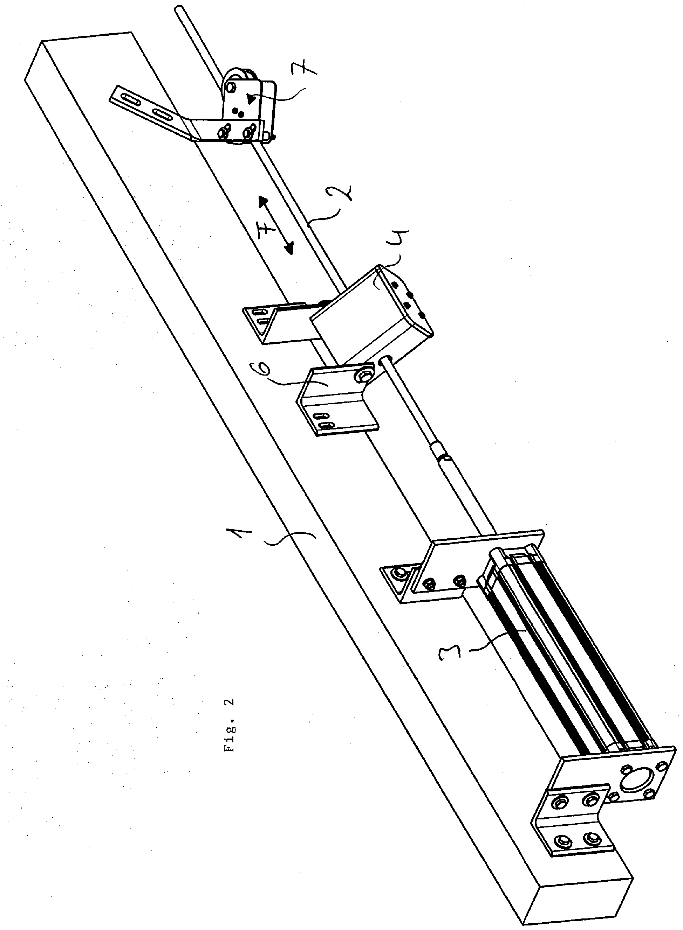

Ein zugehöriges Leitungssystem ist ebenfalls in Fig. 5 offenbart und umfasst in der Regel die zwischen Druckluftspeicher 15 und Bremseinheit bzw. Antrieb vorhandenen Leitungen. Die Fig. 1 und 2 wiederum zeigen eine Bremseinheit 4 auf, über die das Betätigungsmittel 2 festgehalten werden kann.

Sowohl die Bremseinheit 4 als auch der Antrieb 3 sind über einfache Befestigungsmittel in Form von Winkeln 6 an der Traufe 1 befestigt. Zur Vermeidung von Komplikationen im Winter sind sowohl der Antrieb als auch die Bremseinheit wie auch eine Umlenkeinheit 7 regen- bzw. schneegeschützt angeordnet und können somit nicht festfrieren.

Die Bremseinheit weist im vorliegenden Fall zwei Bremssättel 8 auf, von denen der eine feststehend angeordnet ist, der andere jedoch über eine Stange 9 eines in einem Gehäuse 11 angeordneten einfach wirkenden Zylinders betätigbar ist. Im Betätigungsfall drückt die Bremse auf das durch Ausnehmungen 12 hindurchgeführte Betätigungselement und dieses wird zwischen den Bremsbelägen 13 der Bremssättel 12 gehalten.

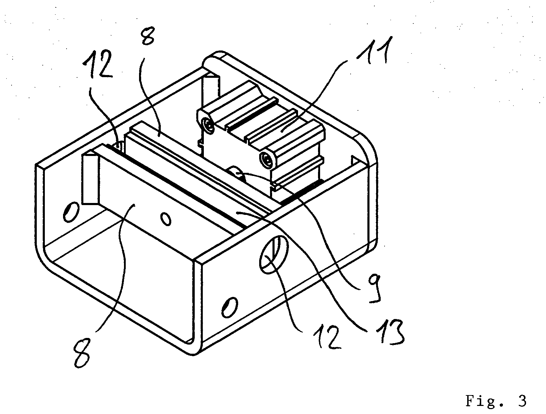

Um bei einem stangenartigen Betätigungselement eine entsprechende Beweglichkeit durch das Andrücken der Stange an den feststehenden Bremssattel zu ermöglichen, sind die Ausnehmungen 12 der Bremseinheit etwas größer als der Durchmesser der Stange ausgebildet (Fig. 3).

In der Umlenkeinheit 7 wird eine Führung des Betätigungselements über zumindest eine Führungsrolle 14 und die Umlenkung eines als Verbindungsseils ausgebildeten Verbindungselements über eine Umlenkrolle 16 gewährleistet. Das Ende des als Verbindungsseil ausgebildeten Verbindungselements ist einerseits an der Stange befestigt, andererseits an dem Lüftungselement.

Die Umlenkeinheit 7 weist darüber hinaus in Langlöchern angeordnete Befestigungsmittel 17 auf, über die eine Ausrichtung der Umlenkrollen 14 und 16 erfolgen kann. Gleiches gilt für die Anordnung an der Traufe 1 mittels in Langlöchern 18 anzuordnenden Befestigungselementen, die an einem Flansch 19 der Umlenkeinheit, der unter Abwinklung zu den Umlenkrollen des eigentlichen Umlenkmoduls 21 führt.

Die erfindungsgemäße Belüftungsanlage ist über einen Schaltplan gemäß Fig. 5 weiter beschrieben. Von einem Druckluftspeicher 15, der über einen Kompressor befüllt wird, führt eine Druckleitung 22 in Richtung der Bremseinheit 4. In dem Schaltplan sind die Stellglieder in ihrer Auffahr- bzw. Stromlos- und Notfallstellung gezeigt. In dieser Position führt ein 3/2-Wege-Ventil 23 in dem Zylinder 24 der Bremseinheit 4 vorhandene Druckluft in einen Ablauf, so dass sich ein Federelement 26 des Zylinders 24 entspannen bzw. aufweiten kann und die Bremse in ihre Offenposition überführt wird.

Die gleiche Position nimmt die Bremseinheit 4 sowie das 3/2-Wege-Ventil ein, wenn die Bremse gelöst werden soll während eines Normalbetriebszustandes und das Betätigungselement zwecks Verstellung der Lüftungselemente bewegt werden soll.

Ein als 5/2-Wege-Ventil ausgebildetes Stellglied 27 ist ebenfalls als Magnetventil vorgesehen und ist für die unterschiedliche Ansteuerung der beiden Seiten (mit/ohne Kolbenstange) eines doppelt wirkenden Zylinders 28 des Antriebs 3 vorgesehen. Präzisionsdrosseln 29 dienen ebenso der sanften Bewegung des Kolbens 31 wie die Verwendung von Druckbegrenzungsventilen 25. Durch das in dem Schaltplan linke Druckbegrenzungsventil wird die Kolbenstangenseite des Zylinders beispielweise mit 6 bar beaufschlagt, während die andere Seite des Zylinders mit 4 bar beaufschlagt wird. Aufgrund von Rückschlagventilen 30 wirkt sich dieser Druck nicht auf die Leitung 22 aus, wenn diese entlüftet wird.

In der gezeigten Stellung des Ventils 27 wird der Zylinder 28 über Leitungen 32 mit Druckluft beaufschlagt und fährt eine Kolbenstange 33 aus. Entsprechend dem in Fig.1 Gezeigten wird hierdurch das Verbindungselement freigegeben, so dass die zugehörigen Fenster freigegeben werden und öffnen können. Dies geschieht aufgrund der schrägen Anordnung der Fenster schwerkraftunterstützt. Die Verbindungselemente sind somit bezüglich der Umlenkeinheit auf der zum Antrieb gewandten Seite des Betätigungselements an dem Betätigungselement 2 angeordnet.

Über Leitungen 34 entlüftet der Zylinder 28 dann ebenfalls über ein Ventil 36, welches als 5/2-Wege-Ventil ausgebildet ist. Sämtliche Magnetventile bzw. Stellglieder sind als Magnetventile mit Federkraftrückstellung ausgebildet. Zwischen den Zuführleitungen 32 ist weiterhin ein 5/2-Wege-Ventil 37 angeordnet, welches bei Erreichen einer gewünschten Ausfahrstellung des Kolbens 31 bzw. der Kolbenstange 33 schaltet.

Um die Kolbenstangenseite des Antriebs 28 mit Druck zu beaufschlagen, fährt wie vorbeschrieben das Stellglied 27 in seine Alternativposition. In dieser erfolgt wiederum eine Entlüftung der weiteren Seite des doppelt wirkenden Zylinders, bis das Stellglied 36 in seine Alternativposition überführt wird und eine weitere Entlüftung aufgrund eines am Anschluss 38 angeordneten Stopfens verhindert wird.

Entsprechendes gilt für eine parallel zu der Betätigung der Stellglieder 27 und 36 erfolgende Überführung des Magnetventils 37 in die Alternativposition und für einen am Anschluss 39 angeordneten Stopfen.

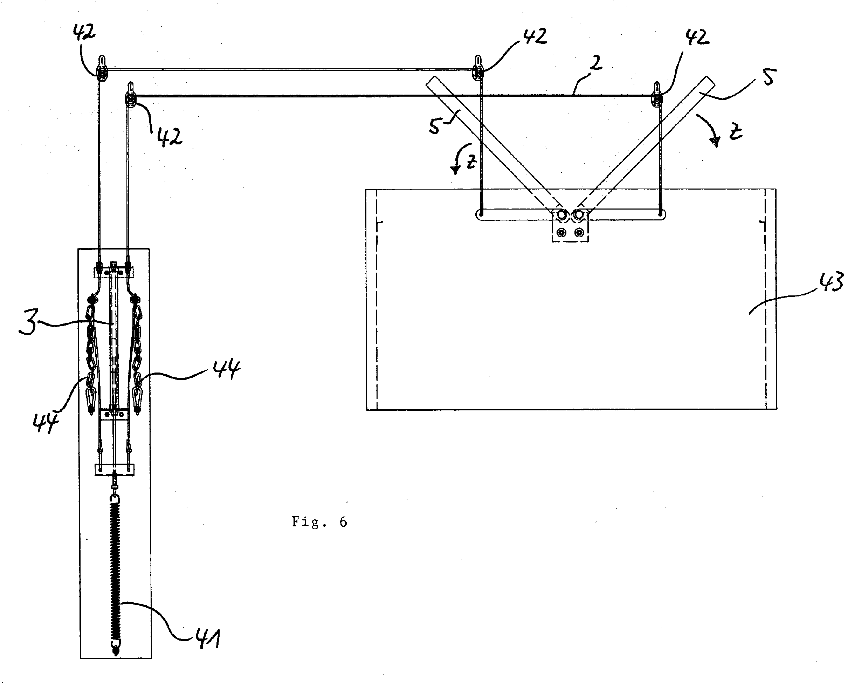

In dem Ausführungsbeispiel gemäß Fig. 6 umfasst der Antrieb 3 ebenfalls einen Zylinder, während das Betätigungselement 2 ein Seil ist. Der Antrieb 3 fährt zum Verschließen der Lüftungselemente gegen die Kraft einer Feder 41 mit seiner Kolbenstange ein, wodurch sich über Umlenkrollen 42 gelenkte Verbindungsseile in Richtung von Lüftungselementen 5 in Form von Lüftungsklappen in einem Abluftschacht 43 in Richtung Z bewegen.

Für den Notfall wird der Zylinder drucklos gestellt bzw. auf seiner unter Druck stehenden Seite entlüftet, so dass sich die Feder 41 zusammenziehen kann und die Lüftungsklappen aufgezogen werden. In einem alternativen Ausführungsbeispiel können die Lüftungsklappen auch schwerkraftbedingt auffallen und nach unten hin öffnen, wobei allerdings zu gewährleisten ist, dass sich durch den Luftzug aus dem Abluftschacht nach oben hin die Klappen nicht wieder zuziehen. Feststellketten 44 dienen der Feststellung der Klappen in einer bestimmten Öffnungsposition.

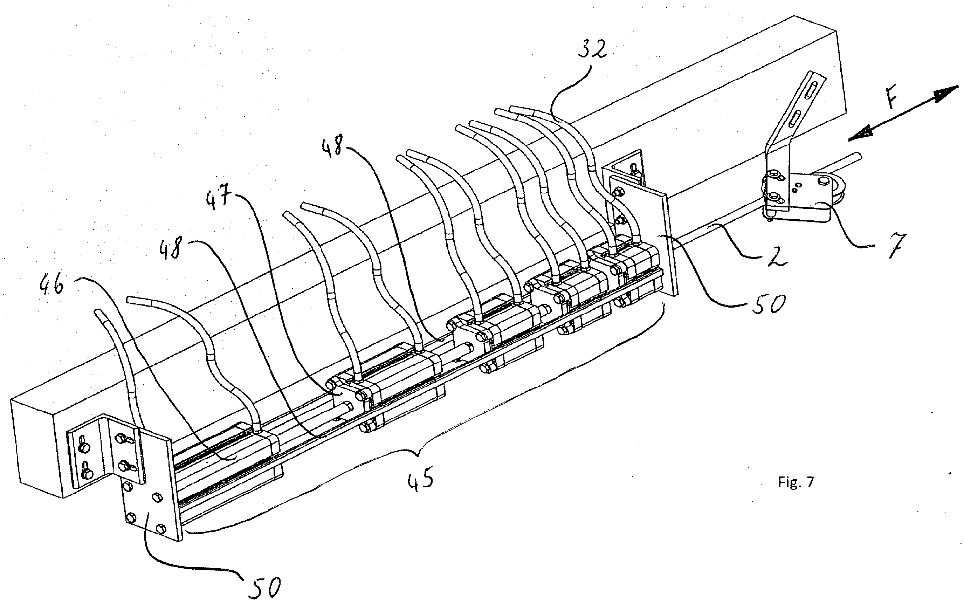

Eine weitere Ausbildung (Fig. 7) der erfindungsgemäßen Belüftungsanlage weist ebenfalls ein als Stange ausgebildetes Betätigungsmittel 2 auf, welches in Richtung F hin- und herbewegbar ist, um eine Geschlossen- oder Offenstellung eines angebundenen Lüftungselements 5 herbeizuführen, welches mit dem Betätigungselement 2 über ein vorzugsweise über eine Umlenkeinheit ausgerichtetes Verbindungselement 10 verbunden ist.

Im Unterschied zu der vorbeschriebenen Erfindungsausbildung weist diese Ausbildung, wie Figur 7 darstellt, eine Antriebseinheit 45 auf, welche weitere, mechanisch in Reihe geschaltete, doppelt wirkende Pneumatikzylinder 46 umfasst. Diese weiteren Zylinder sind vorzugsweise separat pneumatisch anzusteuern und weisen spezifisch unterschiedliche Hublängen auf. Die mechanische Verbindung der Zylinder 46 untereinander erfolgt vorzugsweise durch Zylinderflansche 47. Vorzugsweise werden die weiteren Zylinder 46 durch ein ein- oder mehrteiliges Führungselement, welches vorliegend durch zwei Führungsstangen 48, die zwischen Blechen 50 gehalten sind, ausgebildet ist, in Ihrer Funktionsrichtung durch eine Gleitlagerung geführt. Hierdurch wird eine zu der Funktionsrichtung F im Wesentlichen quer gerichtete Bewegung zwischen Führungselement 48 und Zylindern 46 unterbunden.

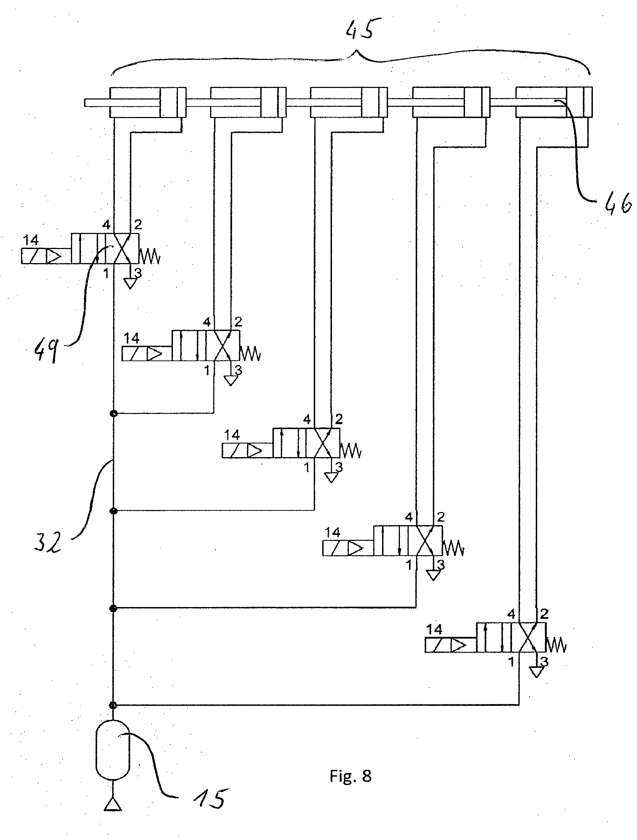

Wie Figur 8 darstellt, sind die weiteren Zylinder der Antriebseinheit 45 vorzugsweise durch 4/2 Wegeventile 49 angesteuert, welche über ein pneumatisches Leitungssystem an einen Druckluftspeicher 15 angeschlossen sind. Die Ventile 49 werden durch Federkraft in einer Position gehalten, in welcher jeder Zylinder 46 ausfährt. Durch Betätigung der elektromagnetischen Ansteuerung wird die Federkraft der Ventile 49 überwunden und ein Einfahren des jeweiligen Zylinders 46 erreicht. Durch diese Schaltung ist im stromlosen Zustand, welcher notfallbedingt eintreten kann, sichergestellt, dass die Ventile 49 durch die Federkraft gesteuert ein Ausfahren der Zylinder 46 der Antriebseinheit 45 bewirken.

## Patentansprüche

1. Belüftungsanlage für Ställe, insbesondere Schweinestallbelüftungsanlage, umfassend wenigstens ein Betätigungsmittel (2) für in einem Normalbetrieb zwischen einer Geschlossen- und zumindest einer Offenstellung bewegbare Lüftungselemente (5), insbesondere Fenster und/oder Lüftungsklappen, mit einem pneumatisch betätigten Antrieb (3) für das Betätigungsmittel (2) und einem Druckluftspeicher (15), der im Notfall eines Stromausfalls Energie zur Verfügung stellen kann, mit einem Leitungssystem, über das der Antrieb (3) im Notfall mit Energie beaufschlagt werden kann, und mit wenigstens einem Stellglied (27,36,37), welches im Notfall zur Herstellung einer Verbindung zwischen Druckluftspeicher (15) und Antrieb (3) schaltet, wobei der Antrieb (3) und der Druckluftspeicher (15) ebenfalls zur Verwendung im Normalbetrieb ausgebildet sind, **dadurch gekennzeichnet, dass** das Stellglied (27,36,37) als elektrisch betätigtes Magnetventil ausgebildet ist, das im Normalbetrieb das Betätigungsmittel (2) zur Geschlossen- oder Offenstellung der Lüftungselemente (5) steuert und das mit einer Federkraft- oder pneumatischer Rückstellung zu einer Stromlos- und Notfallstellung im Notfall bewegt wird, die das Betätigungsmittel (2) zu einer Offenstellung der Lüftungselemente (5) steuert.

2. Belüftungsanlage nach Anspruch 1, **gekennzeichnet durch** eine gemeinsame Stromversorgung für einen den Druckluftspeicher (15) versorgenden Kompressor und das mit Feder- oder pneumatischer Rückstellung versehene Stellglied (27,37).

3. Belüftungsanlage nach Anspruch 1 oder 2, **dadurch gekennzeichnet, dass** der Antrieb (3) einen einfach wirkenden Zylinder aufweist, der gegen feder- oder gewichtskraftbelastete Lüftungselemente (5) arbeitet.

4. Belüftungsanlage nach einem der vorherigen Ansprüche, **dadurch gekennzeichnet, dass** der Antrieb als doppeltwirkender Pneumatik-Zylinder (28) ausgebildet ist.

5. Belüftungsanlage nach Anspruch 3 oder 4, **dadurch gekennzeichnet, dass** die Belüftungsanlage eine auf das Betätigungsmittel (2) wirkende Bremseinheit (4) aufweist, die im Normalbetrieb über ein weiteres Stellglied (23) zwecks Einnahme einer Geschlossenstellung oder einer anderen Verriegelungsstellung betätigbar und hierfür insbesondere mit Druckluft beaufschlagbar ist.

6. Belüftungsanlage nach Anspruch 5, **dadurch gekennzeichnet, dass** die Länge einer zur Bremseinheit (4) führenden Leitung (22) vom Druckluftspeicher (4) geringer ist als die Länge einer vom Druckluftspeicher (4) zum Antrieb (3) führenden Leitung (32).

7. Belüftungsanlage nach einem der Ansprüche 5 oder 6, **dadurch gekennzeichnet, dass** der einen Pneumatik-Zylinder (28) aufweisende Antrieb (3) auf den beiden Seiten eines Kolbens (31 des Zylinders 28) mit unterschiedlichen Drücken beaufschlagbar ist, wobei diese Drücke vorzugsweise über jeweils ein Druckbegrenzungsventil (25), welches über ein Rückschlagventil (30) mit einer zur Bremseinheit (4) führenden Leitung verbunden ist, vorgebbar sind.

8. Belüftungsanlage nach einem der Ansprüche 4 bis 7, **dadurch gekennzeichnet, dass** der Antrieb (3) eine Mehrzahl von mechanisch in Reihe geschalteten, doppeltwirkenden Zylindern insbesondere unterschiedlichen Hubs aufweist.

9. Belüftungsanlage nach Anspruch 8, **dadurch gekennzeichnet, dass** die weiteren Zylinder separat ansteuerbar und vorzugsweise in einer gemeinsamen Führung (42) angeordnet sind.

10. Belüftungsanlage nach einem der vorherigen Ansprüche, **dadurch gekennzeichnet, dass** das Betätigungsmittel (2) eine entlang der Lüftungselemente (5) zu lagernde Stange ist, von der über Verbindungsmittel (10) auf die Lüftungselemente (5) eingewirkt werden kann.

11. Belüftungsanlage nach Anspruch 10, **gekennzeichnet durch** Umlenkeinheiten (7) der Stange, die jeweils gleichzeitig eine Umlenkung für das jeweils einenends an dem Betätigungsmittel (2) und anderenends an einem der Lüftungselemente zu befestigende, Zug- und/oder Druckkräfte übertragende Verbindungselement (10) aufweist.

12. Belüftungsanlage nach einem der vorherigen Ansprüche, mit einer Mehrzahl von Stellgliedern (23,27,36,37), **dadurch gekennzeichnet, dass** die Stellglieder (23,27,36,37) als Magnetventile mit Federkraft- oder pneumatischer Rückstellung ausgebildet sind und zur Verstellung des Betätigungsmittels (2) und der Bremseinheit (4) über eine Schalteinheit steuerbar sind.

13. Belüftungsanlage nach einem der vorherigen Ansprüche, **gekennzeichnet durch** einen Drucksensor, der den Druck im Druckluftspeicher (15) und/oder in einer von dem Druckluftspeicher (15) stammenden Druckleitung (22,32) überwacht, wobei die Schalteinheit zur Ausgabe eines Alarmsignals bei Erreichen eines vorgebbaren oder vorgegebenen Minimaldrucks ausgebildet ist.

14. Belüftungsanlage nach einem der vorherigen Ansprüche, **dadurch gekennzeichnet, dass** das vorzugsweise als Lüftungsklappe ausgebildete Lüftungselement (5) im Normalbetrieb durch einen gegen die Gewichtskraft des Lüftungselements (5) arbeitenden und einen Zylinder aufweisenden Antrieb (3) in eine Geschlossenposition überführbar ist.

15. Belüftungsanlage nach einem der vorherigen Ansprüche mit einer Mehrzahl von als Fenstern ausgebildeten Lüftungselementen (5), **dadurch gekennzeichnet, dass** die Fenster an ihrem unteren Ende gelagert sind und in ihrer Geschlossenstellung dergestalt ein bezüglich einer Lotrechten zum Lager versetztes oberes Ende aufweisen, dass sie im Notfall und insbesondere bei einem Nachgeben des Verbindungselements (10) schwerkraftunterstützt öffnen.

16. Belüftungsanlage nach einem der vorherigen Ansprüche, **dadurch gekennzeichnet, dass** die Öffnungsstellung des Lüftungselements (5) über einen an diesem angeordneten Neigungssensor oder über einen insbesondere an dem Antrieb oder dem Betätigungselement angeordneten Wegmesser detektiert wird.

17. Belüftungsanlage nach einem der vorherigen Ansprüche, **dadurch gekennzeichnet, dass** das Betätigungsmittel (2) zur gleichzeitigen Verstellung mehrerer Lüftungselemente (5) ausgebildet ist.

## Claims

1. Ventilation system for stables, in particular a pigsty ventilation system, comprising at least one actuation means (2) for ventilation elements (5), in particular windows and/or ventilation flaps, that can be moved between a closed position and at least one open position in normal operation, comprising a pneumatically actuable drive (3) for the actuation means (2) and a compressed air reservoir (15), which can provide power in the emergency situation of a power outage, comprising a pipe system, via which the drive (3) can be powered in an emergency, and comprising at least one control element (27, 36, 37), which switches in an emergency to establish a connection between the compressed air reservoir (15) and the drive (3), the drive (3) and the compressed air reservoir (15) likewise being designed for use in normal operation, **characterised in that** the control element (27, 36, 37) is designed as an electrically actuable solenoid valve which, in normal operation, controls the actuation means (2) such that the ventilation elements (5) move towards the closed or open position and which is moved by means of a spring return movement or pneumatic return movement towards a currentless and emergency position in an emergency, which movement controls the actuation means (2) such that the ventilation elements (5) move towards an open position.

2. Ventilation system according to claim 1, **characterised by** a common power supply for a compressor that supplies power to the compressed air reservoir (15) and the control element (27, 37) provided with spring or pneumatic return movement.

3. Ventilation system according to either claim 1 or claim 2, **characterised in that** the drive (3) comprises a single-acting cylinder which works against spring-loaded or gravity-loaded ventilation elements (5).

4. Ventilation system according to any of the preceding claims, **characterised in that** the drive is designed as a double-acting pneumatic cylinder (28).

5. Ventilation system according to either claim 3 or claim 4, **characterised in that** the ventilation system comprises a brake unit (4) that acts on the actuation means (2), can be actuated in normal operation by means of an additional control element (23) for the purpose of assuming a closed position or another locking position and can be supplied in particular with compressed air for this purpose.

6. Ventilation system according to claim 5, **characterised in that** the length of a pipe (22) leading to the brake unit (4) from the compressed air reservoir (4) is shorter than the length of a pipe (32) leading from the compressed air reservoir (4) to the drive (3).

7. Ventilation system according to either of claims 5 or 6, **characterised in that** different pressures can be applied to the drive (3), comprising a pneumatic cylinder (28), on the two sides of a piston (31 of cylinder 28), each of said pressures preferably being specifiable by means of a pressure-limiting valve (25), which valve is connected via a return valve (30) to a pipe leading to the brake unit (4).

8. Ventilation system according to any of claims 4 to 7, **characterised in that** the drive (3) comprises a plurality of double-acting cylinders, in particular having different strokes, that are mechanically connected in series.

9. Ventilation system according to claim 8, **characterised in that** the additional cylinders are arranged so as to be separately controllable and are preferably arranged in a common guide (42).

10. Ventilation system according to any of the preceding claims, **characterised in that** the actuation means (2) is a rod to be mounted along the ventilation elements (5), by means of which rod the ventilation elements (5) can be acted upon via connection means (10).

11. Ventilation system according to claim 10, **characterised by** deflection units (7) of the rod, which units each simultaneously have a deflection means for the connection element (10) that is to be fastened to the actuation means (2) at one end and to one of the ventilation elements at the other end and that transmits tensile and/or compressive forces.

12. Ventilation system according to any of the preceding claims, comprising a plurality of control elements (23, 27, 36, 37), **characterised in that** the control elements (23, 27, 36, 37) are designed as solenoid valves having spring or pneumatic return movement and can be controlled by means of a switch unit for adjusting the actuation means (2) and the brake unit (4).

13. Ventilation system according to any of the preceding claims, **characterised by** a pressure sensor which monitors the pressure in the compressed air reservoir (15) and/or in a pressure pipe (22, 32) coming from the compressed air reservoir (15), the switch unit being designed to emit an alarm signal when a specifiable or specified minimum pressure is reached.

14. Ventilation system according to any of the preceding claims, **characterised in that** the ventilation element (5), preferably designed as a ventilation flap, can be transferred in normal operation into a closed position by means of a drive (3) that works against the gravitational force of the ventilation element (5) and comprises a cylinder.

15. Ventilation system according to any of the preceding claims, comprising a plurality of ventilation elements (5) designed as windows, **characterised in that** the windows are mounted at the lower end thereof and in the closed position thereof have an upper end that is offset with respect to a perpendicular line relative to the mounting in such a way that they open in a gravity-assisted manner in an emergency and in particular when the connection element (10) gives way.

16. Ventilation system according to any of the preceding claims, **characterised in that** the open position of the ventilation element (5) is detected by means of an inclination sensor arranged thereon or by means of a position sensor that is in particular arranged on the drive or on the actuation element.

17. Ventilation system according to any of the preceding claims, **characterised in that** the actuation means (2) is designed to simultaneously adjust a plurality of ventilation elements (5).

## Revendications

1. Système de ventilation de locaux de stabulation, en particulier système de ventilation de porcheries, comprenant au moins un moyen d'actionnement (2) destiné à des éléments de ventilation (5), en particulier des fenêtres et/ou des volets de ventilation, qui sont mobiles en fonctionnement normal entre une position fermée et au moins une position ouverte, un entraînement (3) actionné pneumatiquement et destiné au moyen d'actionnement (2), et un réservoir d'air comprimé (15) qui peut fournir de l'énergie en cas de panne de courant, un système de conduites par le biais duquel l'entraînement (3) peut être alimenté en énergie en cas d'urgence et au moins un actionneur (27, 36, 37) qui commute en cas d'urgence pour établir une liaison entre le réservoir d'air comprimé (15) et l'entraînement (3), l'entraînement (3) et le réservoir d'air comprimé (15) étant également conçus pour être utilisés en fonctionnement normal, **caractérisé en ce que** l'actionneur (27, 36, 37) est conçu comme une électrovanne à commande électrique qui commande, en fonctionnement normal, le moyen d'actionnement (2) de manière à amener les éléments de ventilation (5) en position ouverte ou en position fermée et qui est déplacée en cas d'urgence avec une position de rappel élastique ou pneumatique dans une position hors circuit et de secours qui commande le moyen d'actionnement (2) vers une position ouverte des éléments de ventilation (5).

2. Système de ventilation selon la revendication 1, **caractérisé par** une alimentation en courant commune à un compresseur alimentant le réservoir d'air comprimé (15) et à l'actionneur pourvu d'une position de rappel élastique ou pneumatique (27, 37).

3. Système de ventilation selon la revendication 1 ou 2, **caractérisé en ce que** l'entraînement (3) comporte un cylindre à simple effet qui agit à l'encontre des éléments de ventilation (5) contraint par un ressort ou par un poids.

4. Système de ventilation selon l'une des revendications précédentes, **caractérisé en ce que** l'entraînement est conçu comme un cylindre pneumatique à double effet (28).

5. Système de ventilation selon la revendication 3 ou 4, **caractérisé en ce que** le système de ventilation comporte une unité de freinage (4) agissant sur le moyen d'actionnement (2) et pouvant être actionné en fonctionnement normal par le biais d'un autre actionneur (23) pour prendre une position fermée ou une autre position de verrouillage et pouvant pour cela être alimenté notamment avec de l'air comprimé.

6. Système de ventilation selon la revendication 5, **caractérisé en ce que** la longueur d'une conduite (22), qui va du réservoir d'air comprimé (4) à l'unité de freinage (4), est inférieure à la longueur d'une conduite (32) qui va du réservoir d'air comprimé (4) à l'entraînement (3).

7. Système de ventilation selon l'une des revendications 5 ou 6, **caractérisé en ce que** l'entraînement (3) comportant un cylindre pneumatique (28) peut être soumis à des pressions différentes des deux côtés d'un piston (31 du cylindre 28), ces pressions pouvant être prédéfinies de préférence par le biais d'une soupape de limitation de pression (25) qui est reliée par le biais d'un clapet anti-retour (30) à une conduite menant à l'unité de freinage (4).

8. Système de ventilation selon l'une des revendications 4 à 7, **caractérisé en ce que** l'entraînement (3) comporte une pluralité de cylindres à double effet, montés mécaniquement en série, qui ont en particulier des courses différentes.

9. Système de ventilation selon la revendication 8, **caractérisé en ce que** les autres cylindres peuvent être commandés séparément et sont disposés de préférence dans un guide commun (42).

10. Système de ventilation selon l'une des revendications précédentes, **caractérisé en ce que** le moyen d'actionnement (2) est une barre qui est à être placée le long des éléments de ventilation (5) et qui permet d'agir sur les éléments de ventilation (5) par le biais de moyens de liaison (10).

11. Système de ventilation selon la revendication 10, **caractérisé par** des unités de déviation (7) de la barre qui présentent chacune simultanément une déviation pour l'élément de liaison (10) transmettant des forces de traction et/ou de compression et se fixant à une extrémité au moyen d'actionnement (2) et à l'autre extrémité à l'un des éléments de ventilation.

12. Système de ventilation selon l'une des revendications précédentes, comprenant plusieurs actionneurs (23, 27, 36, 37), **caractérisé en ce que** les actionneurs (23, 27, 36, 37) sont conçus comme des électrovannes comportant une position de rappel élastique ou pneumatique et peuvent être commandés pour régler le moyen d'actionnement (2) et l'unité de freinage (4) par le biais d'une unité de commutation.

13. Système de ventilation selon l'une des revendications précédentes, **caractérisé par** un capteur de pression qui surveille la pression dans le réservoir d'air comprimé (15) et/ou dans une conduite de pression (22, 32) provenant du réservoir d'air comprimé (15), l'unité de commutation étant conçue pour délivrer un signal d'alarme lorsqu'une pression minimale prédéterminée ou prédéterminable est atteinte.

14. Système de ventilation selon l'une des revendications précédentes, **caractérisé en ce que** l'élément de ventilation (5), conçu de préférence comme un volet de ventilation, peut être transféré en fonctionnement normal en position fermée par un entraînement (3) comportant un cylindre et s'opposant au poids de l'élément de ventilation (5).

15. Système de ventilation selon l'une des revendications précédentes comprenant une pluralité d'éléments de ventilation (5) conçus comme des fenêtres, **caractérisé en ce que** les fenêtres sont montées à leur extrémité inférieure et comportent dans leur position fermée par rapport à une extrémité supérieure décalée perpendiculairement au palier de manière à s'ouvrir par gravité ouvert en cas d'urgence et en particulier lors de la déformation de l'élément de liaison (10) .

16. Système de ventilation selon l'une des revendications précédentes, **caractérisé en ce que** la position ouverte de l'élément de ventilation (5) est détectée par un capteur d'inclinaison disposé au niveau de celui-ci ou d'un capteur de déplacement disposé en particulier au niveau de l'entraînement ou de l'élément d'actionnement.

17. Système de ventilation selon l'une des revendications précédentes, **caractérisé en ce que** le moyen d'actionnement (2) est conçu pour régler simultanément une pluralité d'éléments de ventilation (5).
